# EUROPEAN PATENT SPECIFICATION

(11) **EP 3 109 152 B1**
(45) Date of publication and mention of the grant of the patent: **07.08.2019**
(21) Application number: 15173538.8
(22) Date of filing: 24.06.2015
(51) Int. Cl.: B64C 1/08, B29C 70/44, B29D 99/00

(54) **STIFFENED FUSELAGE COMPONENT AS WELL AS METHOD AND APPARATUS FOR MANUFACTURING A STIFFENED FUSELAGE COMPONENT**
VERSTEIFTE RUMPFKOMPONENTE SOWIE VERFAHREN UND VORRICHTUNG ZUR HERSTELLUNG EINER VERSTEIFTEN RUMPFKOMPONENTE
COMPOSANT DE FUSELAGE RIGIDIFIE ET PROCEDE ET APPAREIL DE FABRICATION D'UN COMPOSANT DE FUSELAGE RIGIDIFIE

(43) Date of publication of application: 28.12.2016
(73) Proprietor: Airbus Operations GmbH, 21129 Hamburg (DE)
(72) Inventor: Joern, Dr. Paul, 21129 Hamburg (DE)
(74) Representative: Schicker, Silvia

(56) References cited:
- EP-A2- 2 662 202
- US-A- 4 137 354
- US-A- 5 487 854
- US-A- 5 707 576
- US-A- 6 110 567
- US-A1- 2010 129 589
- US-A1- 2011 027 526
- US-B1- 8 657 984

## Description

The invention relates to a stiffened fuselage component, in particular a stiffened aircraft fuselage component. Furthermore the invention relates to a method and an apparatus for manufacturing a stiffened fuselage component.

In aircraft construction efforts are being made increasingly to use, as load-bearing components, components that are made entirely or partially of fiber reinforced composite materials, for example carbon fiber reinforced plastics (CFRP). For example DE 10 2007 062 111 A1 describes a crosspiece structure made of carbon fiber reinforced plastics material that is used to support the individual panels of an aircraft floor system for separating a passenger cabin from a cargo area disposed underneath the passenger cabin. It is further known for example from DE 10 2004 001 078 A1 and CN 100418850 to provide aircraft fuselage segments with a skin and reinforcing elements (for example frames, stringers) made of fiber reinforced composite materials.

When manufacturing aircraft structural components from fiber reinforced composite materials, in first step, a multi-layer laminate may be constructed from reinforcing fibers or fiber prepregs. The fiber prepregs may comprise a woven or non-woven fabric made of reinforcing fibers, which is provided with a surface layer of a curable synthetic material, for example an epoxy resin material. The laminate construction may be effected manually or in an automated manner. The reinforcing fibers or fiber prepregs may then be brought into a desired shape of a planar portion intended to form an aircraft skin or of a stiffening portion intended to form a frame or stringer, before a curable material may be injected into the laminate construction. Finally, the injected curable material and/or the curable material applied onto the surfaces of the fibers may be cured under pressure and/or raised temperature, for example in an autoclave cycle, thereby producing a composite material having a matrix of a cured synthetic material and reinforcing fibers embedded in the matrix.

EP 2 674 290 A1 and US 2013/337207 A1 concern a method for manufacturing a fuselage barrel or a shell component of an aircraft from a fiber reinforced plastic material. The fuselage barrel or shell component comprises a plurality of monolithic stiffening ribs crossing one another node points and a skin attached to the stiffening ribs. A molding tool for manufacturing the fuselage barrel or shell component has a plurality of channel type depressions for creating the monolithic stiffening ribs. At least one depression is designed in the form of a groove with two sidewalls attached on both sides to a base surface. A groove edge zone for the formation of integral connecting feet for the skin is attached to at least one sidewall in at least some sections.

EP 2 662 202 A2 and US 2013/302544 A1 disclose a method for manufacturing a reinforcement section of a fiber composite component, wherein a supporting core with an elastic sleeve is temporarily arranged on an inner surface of a fibrous material intended to form the reinforcement section. A curable material may be present in the fibrous material or may be injected into the fibrous material. Upon curing the curable material under a reduced pressure, the sleeve of the supporting core is drawn against the inner surface of the fibrous material so as to exert a pressure thereupon.

US 6,110,567 A is directed to a composite structural panel for an aircraft, the panel formed of a single composite face sheet with a stiffener grid adhesively attached to one side of the face sheet. The stiffener grid is formed of an interlocked set of parallel first elongated grid channels extending in a first direction and parallel second elongated grid channels extending in a second direction. Each grid channel is a hollow channel section including two shear walls formed of a shear wall composite material having woven bidirectional shear wall fiber reinforcement cloth embedded in a shear wall matrix, and a cap extending between the top of each of the two shear walls. The cap is formed of a cap composite material having unidirectional cap fiber reinforcement embedded in a cap matrix, with the unidirectional cap fiber reinforcement extending parallel to the direction of elongation of the grid channel. The stiffener grid may be a diamond-shape grid with the first direction of elongation at some angle other than 90 degrees to the second direction of elongation. The grid pattern may be uniform over the entire panel, or it may be varied at different locations. The closer the parallel grid channels, the greater the resistance to bending deflection of the structural panel. The parameters of the grid channels may also be uniform across the entire width and breadth of the structural panel, or they may vary according to location. Such controllable parameters include, for example, the height, the width, the thickness of the cap, the types of fibers and matrices in the cap and the shear walls, and the number of plies in the shear walls.

The invention is directed to the object of providing a weight-optimized stiffened fuselage component which is particularly suitable for use in an aircraft. Furthermore, the invention is directed to the object of providing a method for efficiently manufacturing a stiffened fuselage component of this kind.

The above mentioned object is achieved by a stiffened fuselage component as defined in claim 1 and a method as defined in claim 5.

A stiffened fuselage component which is particularly suitable for use in an aircraft is made of a fiber reinforced composite material. Different fiber reinforced composite materials may be used for manufacturing the stiffened fuselage component. As reinforcing fibers, for example carbon fibers, but also other reinforcing fibers may be employed. The reinforcing fibers may be embedded in a matrix of a curable thermoset material, such as for example a resin material, in particular an epoxy resin. Alternatively, also a thermoplastic material, for example polyether ether ketone (PEEK) may be used for forming the matrix of the fiber reinforced composite material. The stiffened fuselage component may be designed so as to define a section of an aircraft fuselage. The component may extend along only a part of the circumference of the aircraft fuselage or may extend along the entire circumference of the aircraft fuselage.

The stiffened fuselage component comprises a skin element. The skin element may be designed in the form of planar element, but preferably is provided with a curved shape which is adapted to a curvature of a fuselage section, in particular an aircraft fuselage section, the fuselage component is intended to form. Preferably, the skin element is designed in the form of a monolithic element. If desired, additional functional layers such as reinforcing layers or the like may be integrated into the skin element. The skin element may comprise an outer surface which, in case the fuselage component is designed in the form of an aircraft fuselage component, may be suitable to form a section of the aircraft's outer skin. Furthermore, the skin element may comprise an inner surface which, in case of the fuselage component is designed in the form of an aircraft fuselage component, may be suitable to face an interior of the aircraft fuselage.

The stiffened fuselage component further comprises a plurality of elongated stiffening elements forming a stiffening element pattern comprising a plurality of node points and being attached to the inner surface of the skin element. The skin element and the stiffening elements preferably are made of the same fiber reinforced composite material. It is, however, also conceivable to use different fiber reinforced composite materials for the skin element and the stiffening elements.

At least some of the node points are defined by an intersection of at least two stiffening elements at an acute angle or an obtuse angle. The fuselage component thus differs for example from prior art aircraft fuselage components, wherein ribs (extending around the circumference of the fuselage) and stringers (extending parallel to a longitudinal axis of the fuselage) always intersect with each other at right angles, in the arrangement of the elongated stiffening elements relative to each other at the node points. By deviating from the prior art arrangement of the stiffening elements, both the weight and the load bearing capacity of the fuselage component can be adapted as needed to specific requirements. Furthermore, in the fuselage component, different designs for ribs and stringers as well as an integration of ribs into a pre-manufactured skin/stringer structure are no longer necessary.

The arrangement of the stiffening elements relative to each other may be the same at different node points or may vary from node point to node point, i.e., for example, at some node points the stiffening elements may intersect at a specific first acute angle, whereas at other node points the stiffening elements may intersect at a specific second acute angle or at an obtuse angle. Furthermore, some or all node points may be defined by the intersection of only two stiffening elements or some or all node points may be defined by the intersection of more than two, for example three or more stiffening elements.

At least some of the elongated stiffening elements of the fuselage component are shaped so as to define an internal cavity delimited by an inner surface of the stiffening elements and covered by the skin element. As compared to fuselage components which are equipped with monolithic stiffening elements, the stiffened fuselage component thus distinguishes by a low weight. The stiffening elements may, for example, be designed in the form of omega stiffeners which, due to their size and shape, allow an advantageous distribution of the reinforcing fibers within the composite material used for making the stiffening elements. At the node points of the stiffening element pattern, omega stiffeners may define a so-called "star-like omega hat", i.e. a star pattern with a continuous internal hollow space which is defined by the internal cavities of the stiffening elements meeting at the node points of the stiffening element pattern. It is, however, also conceivable to provide the fuselage component with stiffening elements having other cross sectional shapes than an omega-shaped cross-sectional shape, for example, a more rounded cross-section or the like.

The stiffening element pattern defined by elongated stiffening elements of the fuselage component preferably is an irregular pattern, wherein distances between individual stiffening elements and/or node points varies. Furthermore, within the stiffening element pattern, the design of the node points in terms of the number and the angular arrangement of the stiffening elements intersecting each other at the node points may vary. In a particularly preferred embodiment of the fuselage component, the distribution of the stiffening elements in the stiffening element pattern is adjusted in dependence on load bearing requirements defined for different regions of the stiffened fuselage component. For example, regions of the fuselage component which face higher load bearing requirements may be provided with more stiffening elements than regions of the fuselage component which face lower load bearing requirements.

At least some of the plurality of elongated stiffening elements may differ from each other, for example in at least one of length, cross sectional shape and cross-sectional area. Alternatively or additionally thereto, at least some of the plurality of elongated stiffening elements, along a longitudinal axis thereof, may be provided with at least one of a varying cross sectional shape and a varying cross-sectional area. Moreover, it is also conceivable, that at least some of the plurality of elongated stiffening elements, along a longitudinal axis thereof, are curved with a constant or varying curvature. The stiffening elements may be curved so as to extend parallel to a curved skin element. Alternatively or additionally thereto, the stiffening elements, however, may also be curved relative to a plane defined by the (curved) skin element. A fuselage component which is provided with varying stiffening elements may be optimized in terms of both weight and load bearing capability, since regions of the fuselage component which face higher load bearing requirements can easily be provided with stronger and suitably shaped, but heavier stiffening elements than regions of the fuselage component which face lower load bearing requirements.

At least some of the plurality of elongated stiffening elements comprise a foam core arranged in the internal cavity delimited by the inner surface of the stiffening elements and covered by the skin element. The foam core may, for example, be a CNC-milled foam core and is selectively designed as a load bearing component.

At least some of the plurality of elongated stiffening elements are connected to each other by an internal skin element extending substantially parallel to and being attached to the skin element. The fuselage component then is particularly easy to manufacture, since plural stiffening elements, together with the internal skin element, can be joined to the skin element in a single manufacturing step. The internal skin element merely extends between adjacent stiffening elements, so that the internal cavities of the stiffening elements are only covered by the skin element.

In a particularly preferred embodiment of the stiffened fuselage component, a functional element such as for example at least one of an electric line and a fluid line may be arranged in the internal cavity delimited by the inner surface of the stiffening elements and covered by the skin element. Thus, the functional element can be assembled in a particularly space-saving manner. The stiffening elements of the fuselage component are particularly suitable for accommodating electric lines such as, for example, electric supply lines, communication lines or signal lines and/or fluid lines such as, for example, air lines, oil lines or water lines of, for example, a communication system or an air conditioning system, since the stiffening elements define a continuous "tubing" network across the fuselage component. Connectors and/or plugs for connecting lines arranged in the internal cavities of the stiffening elements to each other and/or to a respective superordinate system may also be integrated into the internal cavities.

At least one opening may be provided in at least one of the stiffening elements of the fuselage component which provides access to the internal cavity of the stiffening element. The at least one opening may be used, for example, for inspecting the internal cavity. If need be, for example, a camera may be inserted through the opening and guided through the "tubing" network defined by the stiffening elements of the fuselage component so as to inspect the interior of the "tubing" network and/or functional elements arranged therein. Moreover, the opening may be used to replace functional elements arranged within the cavity of the stiffening element during maintenance

In a method of manufacturing a stiffened fuselage component which is particularly suitable for use in an aircraft a skin element is provided. A plurality of elongated stiffening elements forming a stiffening element pattern comprising a plurality of node points are attached to an inner surface of the skin element, wherein at least some of the node points are defined by an intersection of at least two stiffening elements at an acute angle or an obtuse angle, and wherein at least some of the elongated stiffening elements are shaped so as to define an internal cavity delimited by an inner surface of the stiffening elements and covered by the skin element. The method may be suitably adapted to produce a preferred embodiment of the stiffened fuselage component as described above.

In the method of manufacturing a stiffened fuselage component, at least some of the plurality of elongated stiffening elements may be attached to the skin element in a curing step for curing a thermoset plastic material contained in at least one of the skin element and the plurality of elongated stiffening elements, i.e. at least some of the stiffening elements and the skin element may be joined to each other in a curing or a co-curing step. This allows a particularly efficient and time-saving manufacturing of high quality, high strength fuselage component. As an alternative, it is, however, also conceivable to manufacture, i.e. to shape and cure at least some of the plurality of elongated stiffening elements and the skin element separately and to attach the stiffening elements and the skin element to each other in a separate bonding step and/or by means of mechanical fastening devices, in particular rivets. This manufacturing option may be beneficial in terms of tooling costs and design flexibility. In any case, at least some of the plurality of integrated stiffening elements may be connected to each other by an internal skin element as described above.

At least some of the plurality of elongated stiffening elements, for curing a thermoset plastic material contained in the stiffening elements, may be arranged in respective depressions provided in a surface of a first tool. The surface of the first tool may be curved. During the curing step the stiffening elements may be maintained in place in the depressions provided in the surface of the first tool such that the stiffening elements are shaped as desired. The first tool may comprise a caul plate and the depressions for receiving the stiffening elements may be provided in the caul plate.

Similarly, the skin element, for curing a thermoset plastic material contained in the skin element, may be arranged on a surface of a second tool. During the curing step the skin element may be maintained in place on the surface of the second tool so as to shape the skin element as desired. For example, the second tool may be suitably designed so as to provide the skin element with a curved shape. If desired, the first and/or the second tool may be heated so as to promote the curing process.

At least one of the first tool and the second tool may comprise a plurality of tool cores. The tool cores may be detachably connected to each other, preferably by means of jigs. The tool cores of the first tool may be disassembled, i.e. detached from each other, in order to allow demoulding of the stiffening elements from the first tool. In a similar manner, the tool cores of the second tool may be disassembled, i.e. detached from each other, in order to allow demoulding of the skin element from the second tool. Providing at least one of the first and the second tool with detachably connected tool cores simplifies demoulding of even a very large and very stiff component. This tool design thus is particularly advantageous, in case the fuselage component to be manufactured and hence the first and/or the second tool extend along a substantial part or along the entire circumference of a fuselage, in particular an aircraft fuselage, to be defined in part by the fuselage component. The fuselage to be produced then can be realized with a minimum number of joints.

A foam core, designed as described above, is arranged in the internal cavity of at least some of the elongated stiffening elements, in particular while the stiffening elements are arranged in the respective depressions provided in the surface of the first tool, before the internal cavity is covered by the skin element. The internal cavity may then be covered by the skin element by arranging the skin element on top of the stiffening elements while a thermoset plastic material contained in the skin element is still uncured, since the foam core stabilizes the skin element and hence provides for a shape stability of the skin element during the curing step. The stiffening elements and the skin element then may be co-cured in an efficient manner. As an alternative, it is, however, also conceivable to transfer the stiffening elements with their internal cavities filled with a foam core onto a skin element arranged on the surface of the second tool so as to cover the internal cavities of the stiffening elements with the skin element.

In a further preferred embodiment of the method for manufacturing a stiffened fuselage component, a film tube may be arranged in the internal cavity of at least some of the elongated stiffening elements, maintained in place during a curing step for curing a thermoset plastic material contained in the stiffening elements and removed before the internal cavity is covered by the skin element. The film tube may be effective so as to exert a pressure onto an inner surface of the internal cavities of the stiffening elements during the curing step as described in EP 2 662 202 A2 and US 2013/302544 A1. The film tube may be made of a material which has some flexibility to expand so as to simplify the built-up of pressure onto the inner surface of the internal cavities of the stiffening elements during the curing step.

The film tube may be pre-formed into a shape corresponding to the shape of the internal cavities of at least some of the stiffening elements and corresponding to the stiffening element pattern defined by the stiffening elements. In the region of the node points within the stiffening element pattern the film tube preferably is of a continuous design, i.e. in the region of the node points within the stiffening element pattern, the film tube may comprise a plurality of interconnected branches corresponding to the respective stiffening elements intersecting each other at the node points.

For pre-forming the film tube a separate tool, which may be designed in the form of a negative tool resembling the stiffening element pattern, may be used. For example, the film tube may be deep-drawn into the tool and joined by a melt-joining with an additional top layer film. Thereafter, the film tube may be cut out of the residual material so as to obtain a film tube resembling the stiffening element pattern. The film tube can be stored until it is needed. Prior to arranging the film tube in the internal cavity of at least some of the elongated stiffening elements, a vacuum can be used to reduce the size of the film tube and to thus simplify the integration of the film tube into the cavities of the stiffening elements.

An apparatus for manufacturing a stiffened fuselage component made of a fiber reinforced composite material, in particular for use in an aircraft comprises a first tool having a surface provided with a plurality of depressions. The depressions are adapted to receive a plurality of elongated stiffening elements forming a stiffening element pattern comprising a plurality of node points, wherein at least some of the node points are defined by an intersection of at least two stiffening elements at an acute angle or an obtuse angle, and wherein the depressions are configured to shape at least some of the elongated stiffening elements in such a manner that they define an internal cavity delimited by an inner surface of the stiffening elements and adapted to be covered by a skin element.

The apparatus may further comprise comprise a second tool having a surface adapted to support the skin element. At least one of the first tool and the second tool may comprise a plurality of tool cores which are adapted to be disassembled in order to allow demoulding of the stiffening elements from the first tool and/or demoulding of the skin element from the second tool.

Moreover, the apparatus may comprise a film tube adapted to be arranged in the internal cavity of at least some of the elongated stiffening elements, adapted to be maintained in place during a curing step for curing a thermoset plastic material contained in the stiffening elements and adapted to the removed before the internal cavity is covered by the skin element. The film tube may be pre-formed into a shape corresponding to the shape of the internal cavities of at least some of the stiffening elements and corresponding to the stiffening element pattern defined by the stiffening elements.

Preferred embodiments of the invention now are described in greater detail with reference to the appended schematic drawings, wherein
- Fig. 1: shows a stiffened fuselage component which is adapted to define a section of an aircraft fuselage,
- Fig. 2: shows an alternative stiffened fuselage component which is adapted to define a section of an aircraft fuselage,
- Fig. 3: shows an exemplary method for manufacturing the stiffened fuselage component according to figure 1 or 2 using a first tool,
- Fig. 4: shows a second tool which may be employed upon manufacturing the stiffened fuselage component according to figure 1 or 2, and
- Fig. 5: shows a film tube which may be employed upon manufacturing the stiffened fuselage component according to figure 1 or 2.

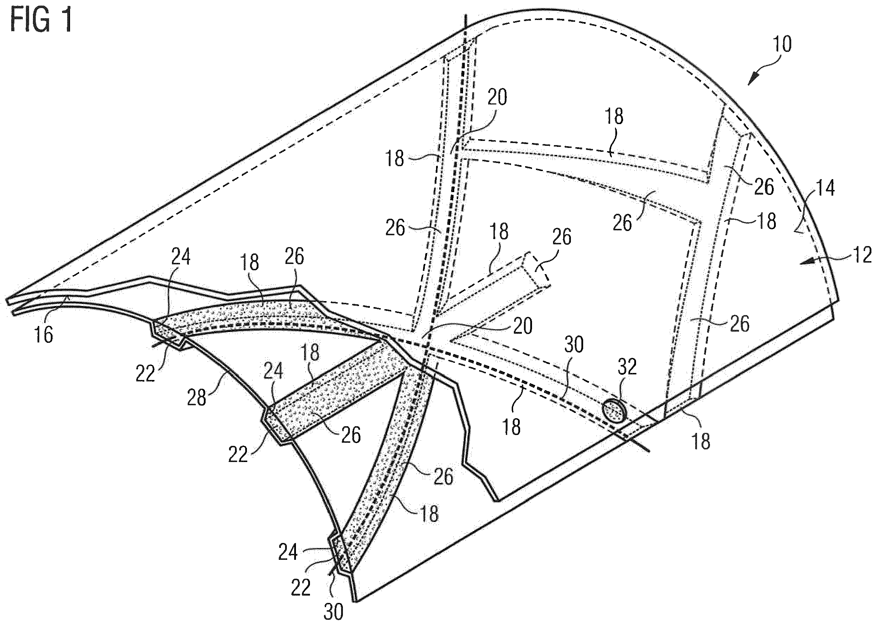

Figure 1 shows a stiffened fuselage component 10 which is intended to define a section of the aircraft fuselage. The fuselage component 10 is made of a fiber reinforced composite material, in particular a carbon fiber reinforced composite material, wherein the carbon fibers are embedded within an epoxy resin matrix. It is, however, also conceivable to use other fiber reinforced composite materials for manufacturing the fuselage component 10.

The fuselage component 10 comprises a skin element 12 having a curved shape, wherein the curvature of the skin element 12 is adapted to the curvature of the aircraft fuselage intended to be defined with the aid of the fuselage component 10. An outer surface 14 of the skin element 12 is adapted to form an outer surface of an aircraft outer skin, whereas an inner surface 16 of the skin element is adapted to face an interior of the aircraft fuselage intended to be defined with the aid of the fuselage component 10.

For stiffening and reinforcing the skin element 12, the fuselage component 12 further comprises a plurality of elongated stiffening elements 18 which are attached to the inner surface 16 of the skin element 12. The stiffening elements 18 form a stiffening element pattern which comprises a plurality of node points 20. The node points 20 are defined by an intersection of at least two stiffening element 18 at an acute angle or an obtuse angle. In the exemplary embodiment of a fuselage component 10 depicted in figure 1, a first node point 20 is defined by an intersection of six stiffening elements 18, whereas second and third node points 20 are defined by an intersection of only three stiffening elements 18.

The stiffening element pattern defined by the stiffening elements 18 is an irregular pattern, wherein the distribution of the individual stiffening elements 18 within the stiffening element pattern is adjusted in dependence on load bearing requirements defined for different regions of the stiffened fuselage component 10. In the exemplary embodiment of a fuselage component 10 depicted in figure 1, the region around the first node point 20 which is defined by an intersection of six stiffening elements 18 distinguishes by a high "density" of stiffening elements 18 and hence high load bearing capacities. In contrast, regions of the fuselage component 10 extending between the stiffening elements 18 are less resistant to loads applied to the fuselage component 10 in use, but are more lightweight than the region around the first node point 20. The design of the fuselage component 10 thus can be locally optimized in terms of both load bearing capacities and weight.

In order to further optimize the load bearing capacities and the weight of the fuselage component 10, the stiffening elements 18 differ from each other in length, cross sectional shape and cross-sectional area. Furthermore, the elongated stiffening elements 18, along a longitudinal axis thereof, are provided with a varying cross sectional shape and a varying cross-sectional area. Furthermore, the integrated stiffening elements 18 are curved so as to extend parallel to the curved skin element 12. Moreover, the stiffening elements 18 are curved relative to a plane defined by the curved skin element 12, wherein the curvature of the stiffening elements 18 varies along the longitudinal axis.

Each of the stiffening elements 18 of the fuselage component 10 is shaped so as to define an internal cavity 22 which is delimited by an inner surface 24 off the stiffening elements 18. Furthermore, the internal cavity 22 of each stiffening element 18 is covered by the skin element 12 so as to define an enclosed hollow space. This allows a further optimization of the weight of the fuselage component 10. In the exemplary embodiment of a fuselage component 10 depicted in figure 1, the stiffening elements 18 are designed as omega stiffeners with an omega shape cross-section. Further, as becomes apparent from figure 1, foam cores 26 are arranged in the internal cavities 22 of the stiffening elements 18.

The fuselage component 10 further comprises an internal skin element 28 which connects the stiffening elements 18 to each other and which is made of the same material as the stiffening elements 18. The internal skin element 28 extends parallel to the skin element 12 and is attached to the skin element 12. The presence of the internal skin element simplifies attachment of the stiffening elements 18 to the skin element 28 as will be described further below.

Finally, the fuselage component 10 comprises functional elements in the form of electric lines 30 which is extend through the continuous "tubing" network defined by the internal cavities 22 of the stiffening elements 18. Thus, the electric lines 30 do not require additional installation space. An opening 32 which provides access to the "tubing" network defined by the internal cavities 22 of the stiffening elements 18 is present so as to allow inspection of the "tubing" network , for example by means of a camera, or replacement of the electric lines 30 during maintenance.

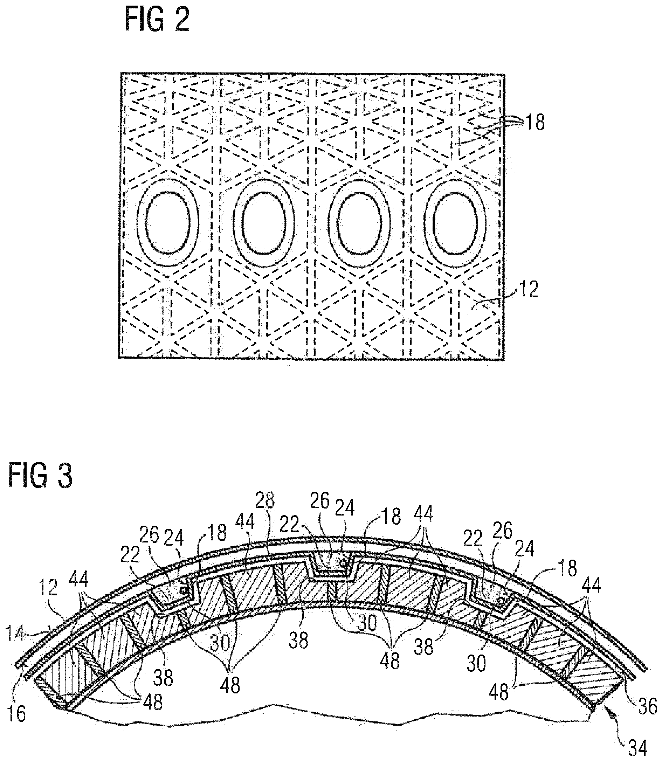

An alternative fuselage component 10 depicted in figure 2 which differs from the fuselage component 10 according to figure 1 in that the stiffening elements 18 of the fuselage component 10 define a regular Iso-grid pattern. Otherwise the structure of the fuselage component 10 according to figure 2 corresponds to the structure of the fuselage component 10 depicted in figure 1.

For manufacturing the fuselage component 10, a first tool 34 as depicted in figure 3 may be used. The first tool 34 comprises a surface 36 which is provided with a plurality of differently sized and shaped depressions 38, wherein each of the depressions 38 is adapted to receive one of the elongated stiffening elements 18 of the fuselage component 10, wherein the depressions 38 define a negative pattern of the positive stiffening element pattern defined by the stiffening elements 18. In particular, the depressions 38 resemble the stiffening element pattern comprising a plurality of node points 20, wherein at least some of the node points 20 are defined by an intersection of at least two stiffening elements 18 at an acute angle or an obtuse angle. Furthermore, the depressions 38 are configured to shape the stiffening elements 18 in such a manner that they define the internal cavity 22 delimited by the inner surface 24 of the stiffening elements 18 and adapted to be covered by the skin element 12.

The stiffening elements 18 with the thermoset plastic material contained therein still being uncured are arranged within the depressions 38 provided in the surface 36 of the first tool 34. In the arrangement of figure 3, the stiffening elements 18 are connected to each other by the internal skin element 28. However, the internal skin element 28 may also be omitted. Thereafter, the foam cores 26 are arranged within the internal cavities 22 of the stiffening elements 18. In a next step, the skin element 12 with the thermoset plastic material contained therein also still being uncured is arranged on top of the stiffening elements 18 and the foam cores 26. Finally, the thermoset plastic material contained in the stiffening elements 18, the internal skin element 28 and the skin element 12 is co-cured so as to attach the stiffening elements 18 and the internal skin element 28 to the skin element 12, while the foam cores 28 provide for the required stability of the skin element 12 during the curing process.

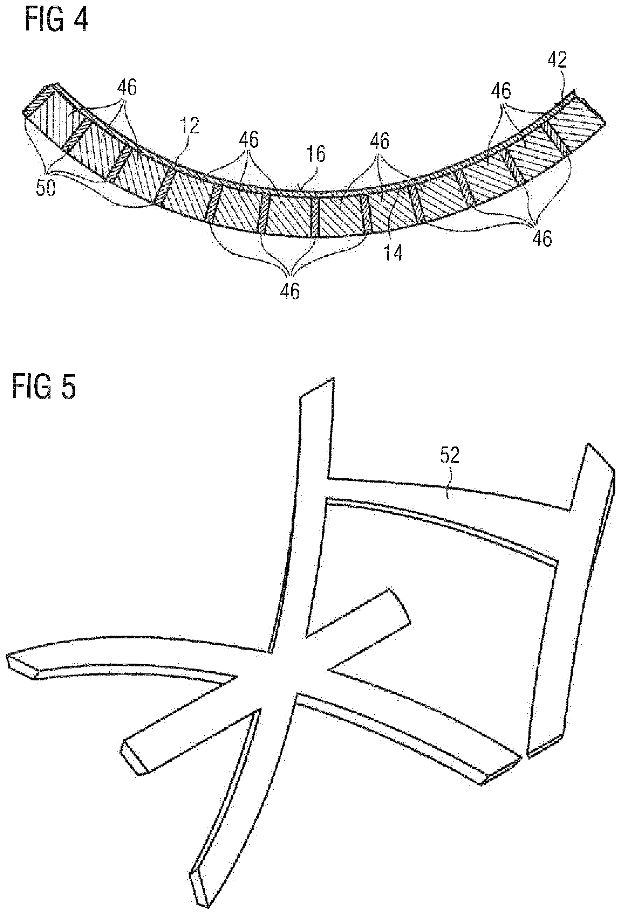

In an alternative manufacturing process, the thermoset plastic material contained in one of the skin element 12 and the stiffening elements 18 is at least partially cured prior to connecting the skin element 12 and the stiffening elements 18 to each other. For example, a second tool 40, which is depicted in figure 4, may be used for shaping the skin element 12 as desired. The second tool 40 comprises a curved surface 42 onto which the skin element 12 with the thermoset plastic material contained therein still being uncured is arranged. The curing of the thermoset plastic material contained in the skin element 12 then may be effected while the skin element 12 is supported on the surface 42 of the second tool 40.

As desired, the skin element 12 then may be demoulded from the second tool 40 and laid onto the stiffening elements 18 arranged on the first tool 34 or the stiffening elements 18 may be demoulded from the first tool 34 and transferred to the skin element 12 supported on the second tool 40. Each of the first and the second tool 34, 40 comprises a plurality of tool cores 44, 46 which are detachably connected to each other by means of jigs 48, 50. Thus, the tool cores 44 of the first tool 34 can be disassembled in order to allow easy demoulding of the stiffening elements 18 from the first tool 34. Similarly, the tool cores 46 of the second tool 40 can be disassembled in order to allow easy demoulding of the skin element 12 from the second tool 40.

The skin element 12 and the stiffening elements 18 then may be attached to each other by curing the still uncured thermoset plastic material contained in one of the skin element 12 and the stiffening elements 18. Further, it is also conceivable, to manufacture the skin element 12 and the stiffening elements 18 separately and then to attach the skin element 12 and the stiffening elements 18 to each other by bonding and/or by means of mechanical fastening devices such as, for example, rivets.

In an alternative method for manufacturing the stiffened fuselage component 10, a film tube 52 as depicted in figure 5 may be arranged in the internal cavities 22 of the elongated stiffening elements 18, maintained in place during a curing step for curing a thermoset plastic material contained in the stiffening elements 18 and removed before the internal cavity is covered by the skin element 12. The film tube 52 may be made of a material which has some flexibility to expand and may be effective so as to exert a pressure onto an inner surface of the internal cavities of the stiffening elements during the curing step as described in EP 2 662 202 A2 and US 2013/302544 A1.

The film tube 52 is pre-formed into a shape corresponding to the shape of the internal cavities 22 of the stiffening elements 18 and corresponding to the stiffening element pattern defined by the stiffening elements 18. In the region of the node points 20 within the stiffening element pattern the film tube 52 is of a continuous design, i.e. in the region of the node points within the stiffening element pattern, the film tube 52 comprises a plurality of interconnected branches corresponding to the respective stiffening elements 18 intersecting each other at the node points 20. For pre-forming the film tube 52, a separate tool, which is designed in the form of a negative tool resembling the stiffening element pattern (not shown), is used.

## Claims

1. A stiffened fuselage component (10) made of a fiber reinforced composite material, in particular for use in an aircraft, comprising:
- a skin element (12), and
- a plurality of elongated stiffening elements (18) forming a stiffening element pattern comprising a plurality of node points (20) and being attached to an inner surface (16) of the skin element (12), wherein at least some of the node points (20) are defined by an intersection of at least two stiffening elements (18) at an acute angle or an obtuse angle, and wherein at least some of the elongated stiffening elements (18) are shaped so as to define an internal cavity (22) delimited by an inner surface (24) of the stiffening elements (18) and covered by the skin element (12),
**characterized in that**
at least some of the plurality of elongated stiffening elements (18) are connected to each other by an internal skin element extending substantially parallel to and being attached to the skin element (12), said internal skin element extending between adjacent stiffening elements (18) so that the internal cavities (22) of the stiffening elements (18) are only covered by the skin element (12), and at least some of the plurality of elongated stiffening elements (18) comprise a foam core (26) arranged in the internal cavity (22) delimited by the inner surface (24) of the stiffening elements (18) and covered by the skin element (12), wherein the foam core (26) is selectively designed as load bearing component.

2. The stiffened fuselage component according to claim 1,
wherein the stiffening element pattern is an irregular pattern, the distribution of the stiffening elements (18) in the stiffening element pattern being adjusted in dependence on load bearing requirements defined for different regions of the stiffened fuselage component (10).

3. The stiffened fuselage component according to claim 1 or 2,
wherein at least some of the plurality of elongated stiffening elements (18) differ from each other in at least one of length, cross sectional shape and cross-sectional area, and/or wherein at least some of the plurality of elongated stiffening elements (18), along a longitudinal axis thereof, are provided with at least one of a varying cross sectional shape and a varying cross-sectional area and/or are curved with a constant or varying curvature.

4. The stiffened fuselage component according to any one of claims 1 to 3, wherein at least one of an electric line and a fluid line is arranged in the internal cavity (22) delimited by the inner surface (24) of the stiffening elements (18) and covered by the skin element (12), and/or wherein at least one opening (32) is provided in at least one of the stiffening elements (18) which provides access to the internal cavity (22) of the stiffening element (18).

5. A method of manufacturing a stiffened fuselage component (10) made of a fiber reinforced composite material, in particular for use in an aircraft, the method comprising:
- providing a skin element (12), and
- attaching a plurality of elongated stiffening elements (18) forming a stiffening element pattern comprising a plurality of node points (20) to an inner surface (16) of the skin element (12), wherein at least some of the node points (20) are defined by an intersection of at least two stiffening elements (18) at an acute angle or an obtuse angle, and wherein at least some of the elongated stiffening elements (18) are shaped so as to define an internal cavity (22) delimited by an inner surface (24) of the stiffening elements (18) and covered by the skin element (12),
**characterized by**,
- before attaching the stiffening elements (18) to the inner surface of the skin element (12), connecting at least some of the plurality of elongated stiffening elements (18) to each other by an internal skin element such that said internal skin element extends between adjacent stiffening elements (18), wherein said internal skin element extends substantially parallel to the skin element (12) and the internal cavities (22) of the stiffening elements (18) are only covered by the skin element (12), when the stiffening elements are attached to the inner surface of the skin element, and
- before attaching the stiffening elements (18) to the inner surface of the skin element (12), arranging a foam core (26) in the internal cavity (22) of at least some of the elongated stiffening elements (18), wherein the foam core (26) is selectively designed as load bearing component.

6. The method according to claim 5,
wherein at least some of the plurality of elongated stiffening elements (18), which are connected to each other by the internal skin element extending substantially parallel to the skin element (12), are attached to the skin element (12) in a curing step for curing a thermoset plastic material contained in at least one of the skin element (12) and the plurality of elongated stiffening elements (18) and/or wherein the at least some of the plurality of elongated stiffening elements (18) and the skin element (12) are manufactured separately and attached to each other by bonding and/or by means of mechanical fastening devices, in particular rivets.

7. The method according to claim 5 or 6,
wherein at least some of the plurality of elongated stiffening elements (18), for curing a thermoset plastic material contained in the stiffening elements (18), are arranged in respective depressions (38) provided in a surface (36) of a first tool (34) and/or
wherein the skin element (12), for curing a thermoset plastic material contained in the skin element (12), is arranged on a surface (42) of a second tool (40).

8. The method according to claim 7,
wherein at least one of the first tool (34) and the second tool (40) comprises a plurality of tool cores (44, 46) which are disassembled in order to allow demoulding of the stiffening elements (18) from the first tool (34) and/or demoulding of the skin element (12) from the second tool (40).

9. The method according to any one of claims 5 to 8,
wherein a film tube (52) is arranged in the internal cavity (22) of at least some of the elongated stiffening elements (18), maintained in place during a curing step for curing a thermoset plastic material contained in the stiffening elements (18) and removed before the internal cavity (22) is covered by the skin element (12).

10. The method according to claim 9,
wherein the film tube (52) is pre-formed into a shape corresponding to the shape of the internal cavities (22) of at least some of the stiffening elements (18) and corresponding to the stiffening element pattern defined by the stiffening elements (18).

## Patentansprüche

1. Versteifte Rumpfkomponente (10), die aus einem Faserverbundwerkstoff hergestellt ist, insbesondere zur Verwendung in einem Flugzeug, umfassend:
- ein Hautelement (12) und
- eine Vielzahl von längserstreckten Versteifungselementen (18), die ein Versteifungselementmuster bilden, das eine Vielzahl von Knotenpunkten (20) umfasst, und an einer Innenfläche (16) des Hautelements (12) angebracht sind, wobei wenigstens einige der Knotenpunkte (20) durch einen Kreuzungspunkt von wenigstens zwei Versteifungselementen (18) in einem spitzen Winkel oder einem stumpfen Winkel definiert sind und wobei wenigstens einige der längserstreckten Versteifungselemente (18) so geformt sind, dass sie einen inneren Hohlraum (22) definieren, der von einer Innenfläche (24) der Versteifungselemente (18) begrenzt und von dem Hautelement (12) abgedeckt ist,
**dadurch gekennzeichnet, dass**
wenigstens einige aus der Vielzahl von längserstreckten Versteifungselementen (18) über ein Innenhautelement miteinander verbunden sind, das sich im Wesentlichen parallel zu dem Hautelement (12) erstreckt und an demselben angebracht ist, wobei sich das Innenhautelement zwischen benachbarten Versteifungselementen (18) erstreckt, so dass die inneren Hohlräume (22) der Versteifungselemente (18) nur von dem Hautelement (12) abgedeckt sind, und wenigstens einige aus der Vielzahl von längserstreckten Versteifungselementen (18) einen Schaumkern (26) umfassen, der in dem inneren Hohlraum (22) angeordnet ist, der von der Innenfläche (24) der Versteifungselemente (18) begrenzt und von dem Hautelement (12) abgedeckt ist, wobei der Schaumkern (26) selektiv als lasttragende Komponente ausgeführt ist.

2. Versteifte Rumpfkomponente nach Anspruch 1,
wobei das Versteifungselementmuster ein unregelmäßiges Muster ist, wobei die Verteilung der Versteifungselemente (18) in dem Versteifungselementmuster abhängig von den lasttragenden Anforderungen angepasst ist, die für verschiedene Bereiche der versteiften Rumpfkomponente (10) definiert sind.

3. Versteifte Rumpfkomponente nach Anspruch 1 oder 2,
wobei sich wenigstens einige aus der Vielzahl von längserstreckten Versteifungselementen (18) in der Länge, der Querschnittsform und/oder der Querschnittsfläche voneinander unterscheiden und/oder wobei wenigstens einige aus der Vielzahl von längserstreckten Versteifungselementen (18) entlang einer Längsachse derselben mit einer veränderlichen Querschnittsform und/oder einer veränderlichen Querschnittsfläche versehen und/oder mit einer konstanten oder veränderlichen Krümmung gekrümmt sind.

4. Versteifte Rumpfkomponente nach einem der Ansprüche 1 bis 3,
wobei eine elektrische Leitung und/oder eine Flüssigkeitsleitung in dem inneren Hohlraum (22) angeordnet sind bzw. ist, der von der Innenfläche (24) der Versteifungselemente (18) begrenzt und von dem Hautelement (12) abgedeckt ist, und/oder wobei wenigstens eine Öffnung (32) in wenigstens einem der Versteifungselemente (18) vorgesehen ist, die einen Zugang zu dem inneren Hohlraum (22) des Versteifungselements (18) bereitstellt.

5. Verfahren zur Herstellung einer versteiften Rumpfkomponente (10), die aus einem Faserverbundwerkstoff hergestellt ist, insbesondere zur Verwendung in einem Flugzeug, wobei das Verfahren Folgendes umfasst:
- Bereitstellen eines Hautelements (12) und
- Anbringen einer Vielzahl von längserstreckten Versteifungselementen (18), die ein Versteifungselementmuster bilden, das eine Vielzahl von Knotenpunkten (20) an einer Innenfläche (16) des Hautelements (12) umfasst, wobei wenigstens einige der Knotenpunkte (20) durch einen Kreuzungspunkt von wenigstens zwei Versteifungselementen (18) in einem spitzen Winkel oder einem stumpfen Winkel definiert sind und wobei wenigstens einige der längserstreckten Versteifungselemente (18) so geformt sind, dass sie einen inneren Hohlraum (22) definieren, der von einer Innenfläche (24) der Versteifungselemente (18) begrenzt und von dem Hautelement (12) abgedeckt ist,
**gekennzeichnet durch**
- vor dem Anbringen der Versteifungselemente (18) an der Innenfläche des Hautelements (12) Verbinden wenigstens einiger aus der Vielzahl von längserstreckten Versteifungselementen (18) miteinander über ein Innenhautelement auf eine solche Weise, dass sich das Innenhautelement zwischen benachbarten Versteifungselementen (18) erstreckt, wobei sich das Innenhautelement im Wesentlichen parallel zu dem Hautelement (12) erstreckt und die inneren Hohlräume (22) der Versteifungselemente (18) nur von dem Hautelement (12) abgedeckt sind, wenn die Versteifungselemente an der Innenfläche des Hautelements angebracht sind, und
- vor dem Anbringen der Versteifungselemente (18) an der Innenfläche des Hautelements (12) Anordnen eines Schaumkerns (26) in dem inneren Hohlraum (22) wenigstens einiger der längserstreckten Versteifungselemente (18), wobei der Schaumkern (26) selektiv als lasttragende Komponente ausgeführt ist.

6. Verfahren nach Anspruch 5,
wobei wenigstens einige aus der Vielzahl von längserstreckten Versteifungselementen (18), die über das Innenhautelement miteinander verbunden sind, das sich im Wesentlichen parallel zu dem Hautelement (12) erstreckt, in einem Aushärtungsschritt zum Aushärten eines wärmehärtenden Kunststoffmaterials, das in dem Hautelement (12) und/oder der Vielzahl von längserstreckten Versteifungselementen (18) enthalten ist, an dem Hautelement (12) angebracht werden und/oder wobei die wenigstens einigen aus der Vielzahl von längserstreckten Elementen (18) und das Hautelement (12) getrennt hergestellt und durch Bonding und/oder mit Hilfe von mechanischen Befestigungsvorrichtungen, insbesondere Nieten, aneinander angebracht werden.

7. Verfahren nach Anspruch 5 oder 6,
wobei wenigstens einige aus der Vielzahl von längserstreckten Versteifungselementen (18) zum Aushärten eines wärmehärtenden Kunststoffmaterials, das in den Versteifungselementen (18) enthalten ist, in entsprechenden Vertiefungen (38) angeordnet sind, die in einer Fläche (36) eines ersten Werkzeugs (34) vorgesehen sind, und/oder
wobei das Hautelement (12) zum Aushärten eines wärmehärtenden Kunststoffmaterials, das in dem Hautelement (12) enthalten ist, auf einer Fläche (42) eines zweiten Werkzeugs (40) angeordnet ist.

8. Verfahren nach Anspruch 7,
wobei das erste Werkzeug (34) und/oder das zweite Werkzeug (40) eine Vielzahl von Werkzeugkernen (44, 46) umfassen bzw. umfasst, die auseinandergenommen werden, um ein Entnehmen der Versteifungselemente (18) aus dem ersten Werkzeug (34) und/oder ein Entnehmen des Hautelements (12) aus dem zweiten Werkzeug (40) zu ermöglichen.

9. Verfahren nach einem der Ansprüche 5 bis 8,
wobei ein Folienschlauch (52) in dem inneren Hohlraum (22) wenigstens einiger der längserstreckten Versteifungselemente (18) angeordnet ist, der in einem Aushärtungsschritt zum Aushärten eines wärmehärtenden Kunststoffmaterials, das in den Versteifungselementen (18) enthalten ist, an Ort und Stelle gehalten wird und entfernt wird, bevor der innere Hohlraum (22) von dem Hautelement (12) abgedeckt wird.

10. Verfahren nach Anspruch 9,
wobei der Folienschlauch (52) in eine Form vorgeformt wird, die der Form der inneren Hohlräume (22) wenigstens einiger der Versteifungselemente (18) entspricht und die dem Versteifungselementmuster, das durch die Versteifungselemente (18) definiert ist, entspricht.

## Revendications

1. Composant de fuselage raidi (10) composé d'un matériau composite renforcé de fibres, plus particulièrement destiné à être utilisé dans un aéronef, comprenant :
- un élément de revêtement (12), et
- une pluralité d'éléments raidisseurs allongés (18) formant un motif d'éléments raidisseurs comprenant une pluralité de points nodaux (20) et attachés à une surface intérieure (16) de l'élément de revêtement (12), au moins certains des points nodaux (20) étant définis par une intersection d'au moins deux éléments raidisseurs (18) suivant un angle aigu ou un angle obtus, et au moins certains des éléments raidisseurs allongés (18) étant conformés de manière à définir une cavité interne (22) délimitée par une surface intérieure (24) des éléments raidisseurs (18) et recouverte par l'élément de revêtement (12),
**caractérisé en ce que**
au moins certains de la pluralité d'éléments raidisseurs allongés (18) sont reliés les uns aux autres par un élément de revêtement interne s'étendant sensiblement parallèlement à l'élément de revêtement (12) et attaché à celui-ci, ledit élément de revêtement interne s'étendant entre des éléments raidisseurs adjacents (18) de façon à ce que les cavités internes (22) des éléments raidisseurs (18) soient uniquement recouvertes par l'élément de revêtement (12), et au moins certains de la pluralité d'éléments raidisseurs allongés (18) comprennent une âme de mousse (26) agencée dans la cavité interne (22) délimitée par la surface intérieure (24) des éléments raidisseurs (18) et recouverte par l'élément de revêtement (12), l'âme de mousse (26) étant conçue sélectivement comme un composant porteur.

2. Composant de fuselage raidi selon la revendication 1,
dans lequel le motif d'éléments raidisseurs est un motif irrégulier, la répartition des éléments raidisseurs (18) dans le motif d'éléments raidisseurs étant ajustée en fonction d'exigences en matière de portance définies pour des régions différentes du composant de fuselage raidi (10).

3. Composant de fuselage raidi selon la revendication 1 ou 2,
dans lequel au moins certains de la pluralité d'éléments raidisseurs allongés (18) diffèrent les uns des autres par leur longueur et/ou leur forme en section transversale et/ou leur superficie en section transversale, et/ou dans lequel au moins certains de la pluralité d'éléments raidisseurs allongés (18), selon leur axe longitudinal, sont pourvus d'une forme en section transversale variable et/ou d'une superficie en section transversale variable et/ou sont incurvés avec une courbure constante ou variable.

4. Composant de fuselage raidi selon l'une quelconque des revendications 1 à 3, dans lequel une conduite électrique et/ou une conduite de fluide sont agencées dans la cavité interne (22) délimitée par la surface intérieure (24) des éléments raidisseurs (18) et recouverte par l'élément de revêtement (12), et/ou dans lequel au moins une ouverture (32) est ménagée dans au moins un des éléments raidisseurs (18), laquelle donne accès à la cavité interne (22) de l'élément raidisseur (18).

5. Procédé de fabrication d'un composant de fuselage raidi (10) composé d'un matériau composite renforcé de fibres, plus particulièrement destiné à être utilisé dans un aéronef, le procédé comprenant :
- la fourniture d'un élément de revêtement (12), et
- l'attache d'une pluralité d'éléments raidisseurs allongés (18), formant un motif d'éléments raidisseurs comprenant une pluralité de points nodaux (20), à une surface intérieure (16) de l'élément de revêtement (12), au moins certains des points nodaux (20) étant définis par une intersection d'au moins deux éléments raidisseurs (18) suivant un angle aigu ou un angle obtus, et au moins certains des éléments raidisseurs allongés (18) étant conformés de manière à définir une cavité interne (22) délimitée par une surface intérieure (24) des éléments raidisseurs (18) et recouverte par l'élément de revêtement (12),
**caractérisé par**,
- avant l'attache des éléments raidisseurs (18) à la surface intérieure de l'élément de revêtement (12), la liaison d'au moins certains de la pluralité d'éléments raidisseurs allongés (18) les uns aux autres par un élément de revêtement interne de façon à ce que ledit élément de revêtement interne s'étende entre des éléments raidisseurs adjacents (18), ledit élément de revêtement interne s'étendant sensiblement parallèlement à l'élément de revêtement (12) et les cavités internes (22) des éléments raidisseurs (18) étant uniquement recouvertes par l'élément de revêtement (12), lorsque les éléments raidisseurs sont attachés à la surface intérieure de l'élément de revêtement, et
- avant l'attache des éléments raidisseurs (18) à la surface intérieure de l'élément de revêtement (12), l'agencement d'une âme de mousse (26) dans la cavité interne (22) d'au moins certains des éléments raidisseurs allongés (18), l'âme de mousse (26) étant conçue sélectivement comme un composant porteur.

6. Procédé selon la revendication 5,
dans lequel au moins certains de la pluralité d'éléments raidisseurs allongés (18), qui sont reliés les uns aux autres par l'élément de revêtement interne s'étendant sensiblement parallèlement à l'élément de revêtement (12), sont attachés à l'élément de revêtement (12) à une étape de cuisson permettant la cuisson d'une matière plastique thermodurcissable contenue dans l'élément de revêtement (12) et/ou la pluralité d'éléments raidisseurs allongés (18), et/ou dans lequel les au moins certains de la pluralité d'éléments raidisseurs allongés (18) et l'élément de revêtement (12) sont fabriqués séparément et attachés les uns aux autres par adhésion et/ou au moyen de dispositifs de fixation mécaniques, plus particulièrement de rivets.

7. Procédé selon la revendication 5 ou 6,
dans lequel au moins certains de la pluralité d'éléments raidisseurs allongés (18), pour la cuisson d'une matière plastique thermodurcissable contenue dans les éléments raidisseurs (18), sont agencés dans des creux (38) ménagés dans une surface (36) d'un premier outil (34), et/ou
dans lequel l'élément de revêtement (12), pour la cuisson d'une matière plastique thermodurcissable contenue dans l'élément de revêtement (12), est agencé sur une surface (42) d'un deuxième outil (40).

8. Procédé selon la revendication 7,
dans lequel le premier outil (34) et/ou le deuxième outil (40) comprennent une pluralité de noyaux (44, 46) d'outil qui sont désassemblés pour permettre le démoulage des éléments raidisseurs (18) par rapport au premier outil (34) et/ou le démoulage de l'élément de revêtement (12) par rapport au deuxième outil (40).

9. Procédé selon l'une quelconque des revendications 5 à 8,
dans lequel un tube de film (52) est agencé dans la cavité interne (22) d'au moins certains des éléments raidisseurs allongés (18), maintenu en place au cours d'une étape de cuisson pour la cuisson d'une matière plastique thermodurcissable contenue dans les éléments raidisseurs (18) et retiré avant que la cavité interne (22) ne soit recouverte par l'élément de revêtement (12).

10. Procédé selon la revendication 9,
dans lequel le tube de film (52) est préformé pour prendre une forme correspondant à la forme des cavités internes (22) d'au moins certains des éléments raidisseurs (18) et correspondant au motif d'éléments raidisseurs défini par les éléments raidisseurs (18).
